Europäisches Patentamt

European Patent Office

Office européen des brevets

(19)

(11) Publication number: **0 344 499**
**A2**

(12) ## EUROPEAN PATENT APPLICATION

(21) Application number: **89108650.6**

(22) Date of filing: **13.05.89**

(51) Int. Cl.⁴: **H04N 1/10 , H04N 1/18**

(30) Priority: **03.06.88 IT 8340788**

(43) Date of publication of application:
**06.12.89 Bulletin 89/49**

(84) Designated Contracting States:
**AT BE CH DE ES FR GB GR LI LU NL SE**

(71) Applicant: **Buderus Sell GmbH**
**Hüttenweg**
**D-6348 Herborn(DE)**

(72) Inventor: **Pozzi, Ugo**
**Frauenalberstrasse 8**
**D-7500 Karlsruhe 51(DE)**

(74) Representative: **Petraz, Gilberto Luigi**
**G.L.P. S.a.s. di Gilberto Petraz P.le Cavedalis**
**6/2**
**I-33100 Udine(IT)**

(54) **Method to scan textile models with an X-Y scanning system, and device which employs the method.**

(57) Method to scan textile models, which is suitable to read images and convert them into electrical signals of a numerical type, the textile models (11) being positioned on a stationary reading table (10) and the electrical signals being sent to a data processing unit (15), in which method the textile models (11) have large dimensions and are positioned stationarily on the reading table (10) and the reading is performed with a high definition through a lens (19) by a photoscanning element (21) able to move along axes lying at a right angle to each other (X-Y) in the presence of a local illumination system (20) able to move in coordination with the photoscanning element (21).

Device to scan textile models , which employs the above method and in which the system to scan the images consists of a movable unit (14) that bears a lens (19), a CCD linear sensor (21)and a local illumination device (20), the movable unit (14) being able to run on a transverse guide (13) driven by a first motor (23) with an encoder (24), the transverse guide (13) in turn being able to run on lengthwise guides (12) driven by a second motor (26) with an encoder (27) and solidly fixed to the reading table (10).

fig. 1

## METHOD TO SCAN TEXTILE MODELS WITH AN X-Y SCANNING SYSTEM, AND DEVICE WHICH EMPLOYS THE METHOD

This invention concerns a method to scan textile models with an X-Y scanning system. To be more exact, this invention concerns a method suitable to read models of great sizes with a high definition system, the models being placed stationarily on suitable reading tables.

The method arranges to send signals arising from the reading to a data processing unit connected to a system for cutting textile surfaces.

The invention concerns also a scanning device that employs the method.

The state of the art includes many methods and devices suitable to read an image and convert it into electrical signals of a numerical type. When suitably processed, these signals are employed to operate units which perform various functions depending on the application for which the overall system is intended.

The vision systems, whether they operate by X-Y scanning or by telecamera, have met with many applications in a great variety of fields. Vision systems with X-Y scanning have not been applied in the textile field with the ability to scan models of great sizes with a very high definition.

The present applicant has studies, tested and achieved a method and a device able to read with an X-Y scanning system textile models of great sizes positioned stationarily on a suitable reading table.

These textile models consist of drawings on paper or another support or of models and/or samples of woven fabrics or other like surfaces such as leathers, hides, synthetic materials, etc.

The greatest sizes of the models to be scanned are of the order of a width of about 1800 mm. and of a length of about 3000 mm.

The method according to the invention provides for the images of the model to be scanned and converted thereafter into electrical signals of a numerical type.

The scanning of the image is carried out by dividing it into square elements called "pixels" and arranged side by side in rows (axis X along the width of the drawing) and in columns (axis Y along the length of the drawing). The dimensions of each pixel are 0.125 mm. x 0.125 mm.

The method provides for the image to be acquired by a movable unit bearing a CCD linear sensor, which performs the mechanical scanning of the image.

The CCD linear sensor advantageously employed according to the invention possesses 1024 pixels and is displaced along both the axes X and Y or along the width and length of the drawing respectively.

Scanning along the axis X scans, in this example, a band of 1024 rows; thereafter the movable unit is advanced along the axis Y so as to be positioned on a new band and to restart scanning along the axis X.

As the dimensions of each pixel are 0.125 x 0.125 mm., the width of the band X is 128 mm. This means, for instance, that twenty-one scannings (2688 mm.) are needed to acquire an image 2700 mm. long.

A CCD sensor having a greater definition, 2048 pixels for instance, can be selected to lessen the number of scannings. The CCD linear sensor has its pixels placed at a distance of $14\mu m$ and therefore requires a lens.

The movable unit bearing the CCD linear sensor is moved by means of two motors, each of them equipped with an encoder; these motors are controlled by a computer, which gets the signals of the encoders and arranges to operate the motors themselves.

An illumination device is solidly fixed to the movable unit and enables only the zone which is being read from time to time to be lighted intensely.

The high levels of local illumination obtainable enable the speed of acquiring a usable signal to be increased.

The illumination device is advantageously a slit with optically insulated glass fibres which projects a luminous line onto the working surface through a cylindrical lens.

The CCD sensor is operated with signals coming from a circuit called a "timings generator" and provides at its output a video signal which, after suitable amplification, is sent to a flash-type analogue/digital converter.

The numerical data provided by this converter are sent to an interface circuit which communicates with the data processing unit.

The part concerning the generation of the timings and the video amplifier is positioned advantageously on the movable unit bearing the CCD sensor.

The other circuits can be rovided on a printed circuit located in the data processing unit, which is connected to a shearing device that cuts textile surfaces substantially at the same time as, or at a time deferred in relation to, the reading of the corresponding models.

The method according to the invention enables a device to be embodied which has modest dimensions and limited movable mechanical parts and which can also be easily fitted to existing tables.

The invention is therefore obtained with a method to scan textile models according to the features of Claim 1 and the claims dependent thereon.

The invention is also embodied with a device which employs the above method according to the features of Claim 9 and the claims dependent thereon.

The attached figures, which are given as a non-restrictive example show the following:-

Fig.1 shows a diagram of a plant to scan models according to the invention and to perform the connected cutting of textile surfaces;

Fig.2 shows from the side a diagram of a reading table with the scanning device performing X-Y scanning;

Fig.3 gives a plan view of the table of Fig.2;

Fig.4 shows a working diagram of the method to scan models according to the invention;

Fig.5 shows a block diagram of the electronic part of the X-Y scanning system;

Fig.6 gives a front view of the device providing local illumination of the working surface according to the invention;

Fig.7 is a side view of the device of Fig.6.

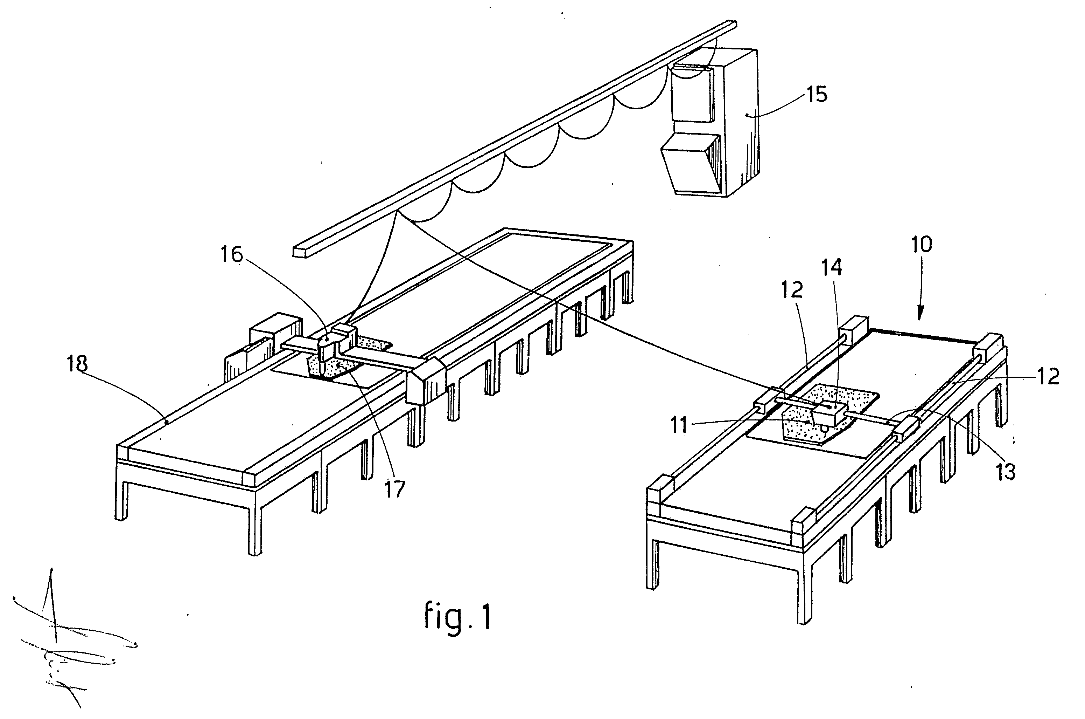

The diagram of Fig.1 shows a table 10 to read textile models 11, which are positioned stationarily on the table 10.

The table 10 comprises lengthwise guides 12 which form the axis Y of the X-Y scanning system of the invention and on which a transverse guide 13 runs which forms the axis X of the scanning system X-Y of the invention.

A movable unit 14 which bears devices able to scan the image of the textile models 11 is driven along the transverse guide 13 and is connected to a data processing unit 15, which operates a device 16 to cut textile surfaces 17 located on a cutting table 18.

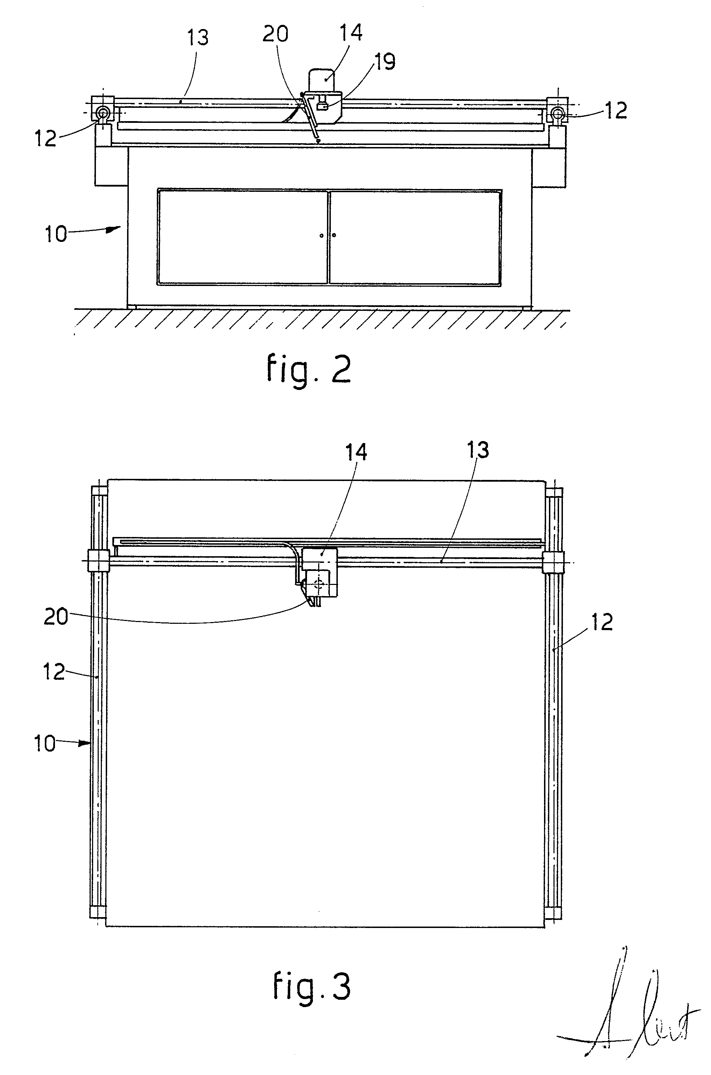

Figs.2 and 3 show a possible configuration of a reading table 10 with the movable unit 14.

A lens 19 of the scanning system of the movable unit 14 and a device 20 to provide local illumination of the textile model 11 are also shown.

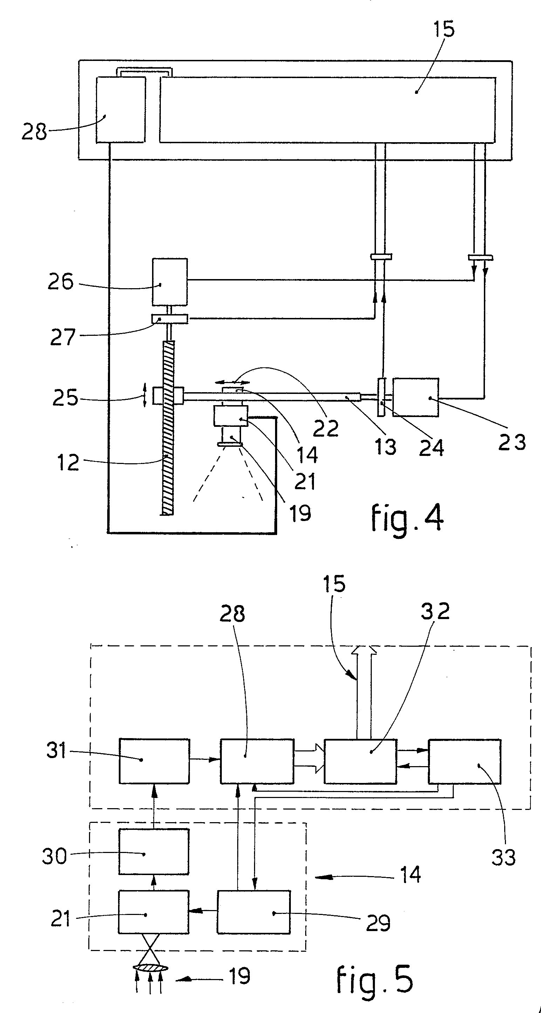

In the working diagram of Fig.4 a CCD sensor 21 performs scanning of the image and covers a succession of strips in its movement along the axis X, which is indicated with an arrow 22

Displacement of the movable unit 14 on the transverse guide 13 is obtained with a first motor 23, advantageously a D.C. motor equipped with an encoder 24.

After scanning an area along the axis X the movable unit 14 and the relative transverse guide 13 are caused to advance by one step along the axis Y according to an arrow 25 and are positioned on a successive area.

Movement of the movable unit 14 along the axis Y is achieved by rotation of the lengthwise guides 12 by a second motor 26 equipped with an encoder 27.

Displacements of the movable unit 14 are actuated directly by the data processing unit 15, which receives signals from the encoders 24-27 and arranges for operation of the first and second motors 23 and 26 respectively.

The signals provided by the CCD sensor 21 are sent to a flash-type analogue/digital converter 28, from which the digital data are sent to the data processing unit 15 through an interlace circuit.

The block diagram of Fig.5 shows the electronic part that supervises the conversation between the movable unit 14 and the data processing unit 15.

The CCD sensor 21 is operated with signals coming from a timings generator 29 and provides as output a video signal, which after suitable amplification in an amplifier 30 passes on to a buffer 31.

The signal is sent thereafter to a flash-type analogue/digital converter 28; the digital data provided by the converter pass to an interface circuit 32 that communicates with the data processing unit 15.

A control logic 33 supervises the functions of the above units.

The timings generator 29, video amplifier 30 and CCD sensor 21 are located on the movable unit 14.

The other circuits described are obtained advantageously on a printed circuit in the data processing unit 15.

The purposes of the invention include the scanning of coloured images, but a person skilled in this field will infer easily the extension of the above to include scanning in black and white.

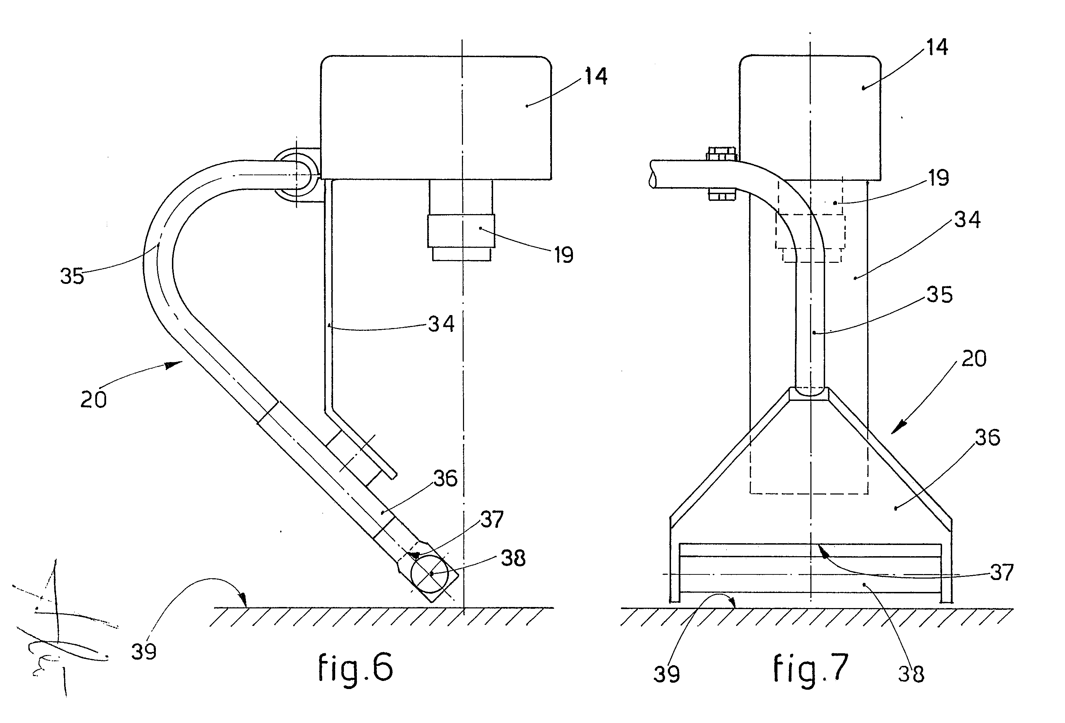

Figs.6 and 7 show the illumination device 20 solidly fixed to the movable unit 14 by a support 34. This illumination device 20 consists of a bundle of optically insulated glass fibres cooperating with a source of light (not shown in the figures), the fibres being gathered together and led through a conduit 35.

The ends of the optically insulated glass fibres are suitably arranged in a diffuser element 36 so as to form a luminous slit corresponding with a lower end surface 37 of the diffuser element 36

In this way a luminous line is projected through a cylindrical lens 38 onto a working surface 39 of the reading table 10, thus providing local illumination of a high level which enables usable signals to be acquired at a great speed.

The present applicant has found that the speed of displacement of the movable unit 14 along the axis X can be of the order of 20-25 metres per minute under normal conditions of use.

## Claims

1 - Method to scan textile models, which is suitable to read images and convert them into electrical signals of a numerical type, the textile models (11) being positioned on a stationary reading table (10) and the electrical signals being sent to a data processing unit (15), in which method the textile models (11) have large dimensions and are positioned stationarily on the reading table (10) and the reading is performed with a high definition through a lens (19) by a photoscanning element (21) able to move along axes lying at a right angle to each other (X-Y) in the presence of a local illumination system (20) able to move in coordination with the photoscanning element (21).

2 - Method as claimed in Claim 1, in which the photoscanning element (21) is a linear CCD sensor of 1024 pixels.

3 - Method as claimed in Claim 1, in which the photoscanning element (21) is a linear CCD sensor of 2048 pixels.

4 - Method as claimed in any claim hereinbefore, in which the CCD sensor (21) is provided with straight motion on two orthogonal coplanar axes (X-Y).

5 - Method as claimed in any claim hereinbefore, in which the straight motion of the CCD sensor (21) on the two orthogonal axis (X-Y) is provided by the action of two motors (23-26) respectively, each equipped with an encoder (24-27).

6 - Method as claimed in any claim hereinbefore, in which the motors (23-26) are operated by the data processing unit (15).

7 - Method as claimed in any claim hereinbefore, in which the electrical signals corresponding to the images scanned are suitable, after being processed (15), to operate a device (16) to cut textile surfaces (17).

8 - Method as claimed in any claim hereinbefore, in which the system (20) to illuminate a working surface (39) is a fibre optics system.

9 - Device to scan textile models , which employs the method of the claims hereinbefore and in which the system to scan the images consists of a movable unit (14) that bears a lens (19), a CCD linear sensor (21) and a local illumination device (20), the movable unit (14) being able to run on a transverse guide (13) driven by a first motor (23) with an encoder (24), the transverse guide (13) in turn being able to run on lengthwise guides (12) driven by a second motor (26) with an encoder (27) and solidly fixed to the reading table (10).

10 - Device as claimed in Claim 9, in which the illumination device (20) consists of a bundle of optically insulated glass fibres gathered in a conduit (35), a diffuser element (36) for the positioning of the ends of the fibres and a cylindrical lens (38).

11 - Device as claimed in Claims 9 and 10, in which the movable unit (14) contains a timings generator (29) and a video amplifier (30).

12 - Device as claimed in Claims 9, 10 and 11, in which the timings generator (29) and video amplifier (30) are connected to a buffer (31) and a flash-type analogue/digital converter (28) respectively.

13 - Device as claimed in Claims 9, 10, 11 and 12, in which the timings generator (29) is connected to a control logic (33).

fig. 1

fig. 2

fig. 3

fig.4

fig.5

fig.6

fig.7

EP 0 344 499 A2